# EUROPÄISCHE PATENTSCHRIFT

(11) **EP 0 691 644 B1**
(45) Veröffentlichungstag und Bekanntmachung des Hinweises auf die Patenterteilung: **28.04.1999**
(21) Anmeldenummer: 95110213.6
(22) Anmeldetag: 30.06.1995
(51) Int. Cl.: G11B 5/702

(54) **Magnetischer Aufzeichnungsträger**
Magnetic recording medium
Support d'enregistrement magnétique

(30) Priorität: 09.07.1994 DE 4424261
(43) Veröffentlichungstag der Anmeldung: 10.01.1996
(73) Patentinhaber: EMTEC Magnetics GmbH, 67059 Ludwigshafen (DE)
(72) Erfinder: Lehner, August, D-67127 Rödersheim-Gronau (DE); Kress, Ria, Dr., D-67063 Ludwigshafen (DE); Kohl, Albert, D-67229 Laumersheim (DE); Hitzfeld, Michael, Dr., D-76185 Karlsruhe (DE)

(56) Entgegenhaltungen:
- US-A- 4 576 866
- US-A- 5 045 351
- US-A- 5 153 063
- PATENT ABSTRACTS OF JAPAN vol. 8 no. 97 (P-272) [1534] ,8.Mai 1984 & JP-A-59 008127 (SONY K.K.) 17.Januar 1984,

## Beschreibung

Die Erfindung betrifft magnetische Aufzeichnungsträger, bestehend aus einem nichtmagnetischen Trägermaterial und mindestens einer darauf haftfest aufgebrachten magnetisierbaren Schicht auf der Basis von in einer Bindemittelmischung aus mindestens einem Polyharnstoffurethan und einem Polyurethanharnstoff(meth)acrylat dispergierten magnetischen Pigmenten.

An magnetische Aufzeichnungsträger werden bezüglich Qualität der Aufzeichnung sowie der Wiedergabe und an die Alterungsbeständigkeit immer höhere Anforderungen gestellt. Um diesen Anforderungen gerecht zu werden, kommt dem polymeren Bindemittel, in welchem die feinteiligen magnetischen Pigmente dispergiert sind, eine zunehmende Bedeutung zu. Angestrebt wird die Verbesserung der Stabilität der magnetischen Dispersion, die Vermeidung des Entstehens von Fehlern auf der Magnetschicht sowie zur Verbesserung der magnetischen Eigenschaften, insbesondere der Remanenz, eine erhöhte Packungsdichte der magnetischen Pigmente in der Schicht, was durch Verringerung des Bindemittelanteils in der magnetischen Schicht erreichbar ist. Ebenso wird versucht, ein verbessertes Signal-Rausch-Verhältnis sowie eine sehr enge Schaltfeldstärkenverteilung durch die Verwendung immer feinteiligerer magnetischer Pigmente mit ausgeprägter und extrem gleichförmiger Nadelform zu erzielen. Die Pigmente werden zudem zur Erhöhung der Lagerstabilität sehr oft oberflächenmodifiziert.

Diese Maßnahmen erschweren sowohl die Aufteilung der Pigmente im Dispergierprozeß als auch das Erreichen einer guten Dispersionsstabilität. Zudem müssen die magnetischen Schichten sehr flexibel sein, eine hohe Elastizität aufweisen und eine hohe Reißfestigkeit besitzen. Außerdem wird zur Vermeidung von Pegeleinbrüchen zunehmend eine Verringerung der Reibungswerte sowie eine Erhöhung der Abrieb- und Verschleißfestigkeit der magnetischen Schicht gefordert. Diese mechanischen Eigenschaften müssen auch bei hoher Temperatur sowie hoher Luftfeuchtigkeit gewährleistet sein.

Zur Erzielung dieser Eigenschaften wurde der Auswahl an den Bindemitteln besondere Aufmerksamkeit gewidmet. Besonders bewährt haben sich Polyurethanelastomere, insbesondere Polyesterurethane, welche unter anderem in den DE-B 11 06 959, DE-A 27 53 694, der EP-A 0 069 955 sowie der US-A 2 899 411 beschrieben sind. In zahlreichen anderen Dokumenten sind Kombinationen von polymeren Bindemitteln beschrieben, beispielsweise in der DE-OS 41 41 839, aus der eine Mischung aus einem hochmolekularen Polyurethan oder einem OH-Gruppen-haltigen Polyharnstoffurethan sowie einem Polyurethanharnstoff(meth)acrylat beschrieben ist; jedoch hat sich herausgestellt, daß diese Kombination bei erhöhten Beanspruchungen Nachteile in der Dispersionsstabilität mit sich zieht. Bekannt sind auch zum anderen Bindemittelabmischungen aus drei Komponenten, wie sie aus den EP-A 0 142 796 sowie 0 142 798 bekannt sind, welche Gemische von niedermolekularen OH-Gruppen-haltigen Polyharnstoffurethanen, hochmolekularen linearen Polyurethanen sowie einem weiteren Bindemittel, ausgewählt aus Vinylcopolymeren, Phenoxyharzen oder Cellulosederivaten sind.

Die vorgenannten Bindemittel sowie Bindemittelkombinationen können jedoch die oben beschriebenen Anforderungen nicht ausreichend erfüllen. In vielen Fällen wird die Benetzung und Dispergierung der Pigmente, insbesondere bei sehr feinteiligen magnetischen Pigmenten, ungünstig beeinflußt, so daß eventuelle Versinterungen beim Dispergierprozeß nicht genügend zerteilt werden oder eine Reagglomeration der Pigmentteilchen nicht ausreichend verhindert wird, was zu schlechten magnetischen Werten des Aufzeichnungsträgers führt. Aus diesem Grunde werden zur Erleichterung des Dispergiervorgangs niedermolekulare Dispergiermittel in kleineren Mengen der Dispersion zugefügt. Die Dispergiermittel weisen jedoch bestimmte Nachteile auf. So können niedermolekulare Dispergiermittel bei ungünstigen Klimabedingungen, wie hoher Luftfeuchtigkeit und/oder Temperatur leicht ausschwitzen, wodurch es in Aufnahme- beziehungsweise Wiedergabegeräten zu Ablagerungen an allen bandführenden Teilen, insbesondere am Magnetkopf, kommt, wodurch Pegeleinbrüche verursacht werden. Außerdem wird die Reibung erhöht, wodurch der magnetische Aufzeichnungsträger beim Durchgang durch ein Gerät zum Blocken kommen kann.

Beim Einsatz dieser Dispergiermittel kann es andererseits zu Verträglichkeitsproblemen in der Dispersion kommen. Da die Dispergiermittel polare Gruppen enthalten, nimmt die Hydrophilie der Schicht stark zu, was bei Feuchtigkeit und hoher Temperatur Quellen der Schicht, Ausschwitzen der Dispergier- und Gleitmittel sowie andere mechanische Veränderungen zur Folge haben kann. Zur Verbesserung der dispergierenden Eigenschaften von Polyurethanbindemitteln wurde schon vor vielen Jahren der Vorschlag gemacht, in dieses Bindemittel polare Gruppen einzubauen. Beispielsweise ist aus der DE-A 28 33 845 die Verwendung von Polyestern mit polaren Gruppen bekannt. Der Einbau von Diolen, die zusätzlich polare Gruppen tragen, wird beispielsweise in der JP-A 57-092 421, der DE-A 38 14 536 sowie der EP-A 0 193 084 beschrieben. Der nachträgliche Einbau polarer Gruppen durch SN-Reaktion an den OH-Endgruppen der Polyurethane wird in der JP-A 57-092 422 offenbart. Derartige Dispergierharze teilen zwar die Pigmente sehr gut auf, führen aber auf der anderen Seite insbesondere bei Pigmenten mit einem hohen BET-Wert, zu Dispersionen mit extrem ungünstigen rheologischen Eigenschaften wie erhöhter Fließgrenze und erhöhter Viskosität, so daß die Verarbeitung und der Verguß dieser Dispersionen zu Magnetschichten mit großen Schwierigkeiten verknüpft ist. Des weiteren ist der Gehalt an ionogenen dispergieraktiven Gruppen in dem Dispergierharz auf eine maximale Konzentration beschränkt, da sonst negative Effekte, wie zum Beispiel Überbrückungsflokkulation, auftreten. Eine Erhöhung der Pigmentvolumenkonzentration auf der einen Seite und eine Verringerung der Teilchengröße der Pigmente auf der anderen Seite ist mit dem notwendigen Gehalt an Dispergierharz nicht mehr vereinbar, sondern gegenläufig.

Eine wesentliche Verbesserung der mechanischen Eigenschaften magnetischer Aufzeichnungsträger konnte mit OH-Gruppen-haltigen Polyurethanen, wie sie beispielsweise in der EP-A 0 099 533 beschrieben sind, erreicht werden. Jedoch reichen auch diese Maßnahmen nicht aus, um die immer weiter gestiegenen Anforderungen an die mechanischen und magnetischen Eigenschaften von Aufzeichnungsträgern zu befriedigen.

Eine deutliche Verbesserung der Dispergiereigenschaften wurde dadurch erzielt, daß der Bindemittelmatrix ein Polyharnstoffacrylat zugefügt wurde, wie beispielsweise aus der DE-OS 41 41 839 bekannt. Dabei ist von Nachteil, daß insbesondere bei mehrstufigen Herstellungsprozessen der magnetischen Dispersion bei Zuführung weiterer Komponenten ein sogenannter Auflackschock entsteht; außerdem neigen die fertigen Dispersionen bei längerer Lagerung zu Flokkulation oder Reagglomeration, was sich durch Fehler der magnetischen Schicht bemerkbar macht. Deswegen werden für die Herstellung von magnetischen Aufzeichnungsträgern sehr häufig Abmischungen von Bindemitteln eingesetzt, wie bereits oben genannt, beispielsweise Kombinationen von elastischen Polyurethanen mit Hartsegmenten, beispielsweise Polyvinylchlorid. Diese Bindemittel sind jedoch nur bedingt mit Polyurethanharnstoffacrylaten verträglich.

Deswegen bestand die Aufgabe, magnetische Aufzeichnungsträger zu schaffen, deren Dispersionen auch über längere Zeit stabil sind, um daraus magnetische Aufzeichnungsträger bereitzustellen und dabei gleichzeitig eine verbesserte Verschleißfestigkeit insbesondere bei Temperatur- und Feuchteklimabelastung eine erhöhte Remanenz, eine engere Schaltfeldstärkenverteilung sowie eine fehlerarme Schichtoberfläche zu erreichen. Erreicht werden sollten außerdem verbesserte magnetische Eigenschaften bei der Speicherung insbesondere digitaler Daten.

Es wurde überraschend gefunden, daß sich die Aufgabe mit magnetischen Aufzeichnungsträgern lösen läßt, bestehend aus einem nichtmagnetischen Trägermaterial und mindestens einer darauf haftfest aufgebrachten magnetisierbaren Schicht auf der Basis von in einer Bindemittelmischung aus mindestens einem Polyharnstoffurethan und einem Polyurethanharnstoff(meth)acrylat dispergierten magnetischen Pigmenten, wobei die Bindemittelmischung besteht aus
A) 3 - 35 Gewichts % eines Polyurethanharnstoff(meth)acrylats
B) 5 - 97 Gewichts % eines anionische Gruppen enthaltenden Polyharnstoffurethans

In einer besonders bevorzugten Version wurde die Aufgabe gelöst mit einer Bindemittelmischung, bestehend aus
A) 5 - 25 Gewichts % eines Polyurethanharnstoff(meth)acrylats
B) 15 - 60 Gewichts % eines anionische Gruppen enthaltenden Polyharnstoffurethans
C) 15 - 60 Gewichts % eines polymeren Bindemittels ohne ionische Gruppen, ausgewählt aus Polyurethanen, Polyvinylchloriden, Polyvinylformalen, Phenoxyharzen, Nitrocellulose, Celluloseestern sowie deren Abmischungen.

Erfindungswesentlich ist, daß durch die Kombination der beiden Bindemittelklassen A) und B) die als Aufgabe gestellte Dispersionsstabilität erreicht wird, was wiederum die Verträglichkeit mit der Komponente C), also Polyurethanen oder Hartsegmenten ermöglicht, wodurch verschleißfeste und erhöhten Beanspruchungen gewachsene magnetische Aufzeichnungsträger resultieren.

Die Komponente A), nämlich Polyurethanharnstoff(meth)acrylat, ist bekannt aus der bereits genannten DE-OS 41 41 839 und ist außerdem beschrieben in der DE-A-4 446 383. In diesen Schriften wird außerdem die Herstellung dieser Verbindungen beschrieben. Besonders günstig für die erfindungsgemäße Bindemittelmatrix ist dabei ein aminogruppenhaltiges Polyurethanharnstoff(meth)acrylat, wie es in der DE-A-4 433 931 beschrieben ist.

Die Komponente B) besteht aus Polyurethanelastomeren, beispielsweise bekannt aus der DE-B 28 33 845, der DE-OS 40 39 749 oder der DE-OS 42 41 506, in denen Polyharnstoffurethane beschrieben werden, welche Sulfonat-, Sulfat-, Phosphonat- oder Phosphatgruppen in einer Menge von 10 - 1000 Äquivalenten pro 10⁶ g Polymerisat, bevorzugt 20 - 300 Äquivalente pro 10⁶ g Polymerisat in der Polymerkette enthalten. Besonders günstig für das Dispergierverhalten und die Stabilität der Dispersion sind Polyurethane, bei denen die anionischen Gruppen im Weichsegment, beispielsweise über sulfonatgruppenhaltige Polyester, eingebaut sind. Geeignet sind aber auch Polyurethane mit Carboxylgruppen oder anderen aus dem Stand der Technik bekannten anionischen Gruppen.

Die in einer besonders bevorzugten Ausführung der Erfindung zusätzliche Bindegemischkomponente C), welche physikalisch trocknende Bindemittel enthält, ist an sich aus dem Stand der Technik bekannt. Es handelt sich hierbei unter anderem um ein Polyvinylformalbindemittel, welches durch Hydrolyse eines Polymerisats eines Vinylesters und anschließende Umsetzung des Vinylalkoholpolymeren mit Formaldehyd hergestellt wurde. Die Polyvinylformale haben zweckmäßigerweise einen Vinylformalgruppengehalt von mindestens 65 Gew.% und insbesondere mindestens 80 Gew.%. Geeignete Polyvinylformale haben einen Gehalt von Vinylalkohol-Gruppen von 5 bis 13 Gew.%, einen Gehalt an Vinylformal-Gruppen von 80 bis 88 Gew.%, ein spezifisches Gewicht von ca. 1,2 und eine Viskosität von 50 bis 120 mPas gemessen bei 20 °C mit einer Lösung von 5 g Polyvinylformal in 100 ml Phenol-Toluol (1 : 1).

In gleicher Weise geeignet sind neben dem Polyvinylformal Vinylchlorid-diol-mono- oder di(meth)acrylat-Copolymerisate, die sich zum Beispiel in an sich bekannter Weise durch Lösungscopolymerisation oder Suspensionscopolymerisation von Vinylchlorid und dem Diol-mono-methacrylat herstellen lassen. Das hierfür zum Einsatz gelangende Diol-mono- oder -diacetat oder -methacrylat ist ein Veresterungsprodukt von Acrylsäure oder Methacrylsäure mit der entsprechenden molaren Menge an aliphatischem Diol mit 2 bis 4 C-Atomen, wie Ethylenglykol, 1,4-Butandiol und bevorzugt Propandiol, wobei das Propandiol vorzugsweise aus 1,3-Propandiol und 0 bis 50 Gew.% 1,2-Propandiol besteht. Die Copolymerisate haben zweckmäßigerweise einen Vinylchloridgehalt von 50 bis 95 Gew.% und einen Diolacrylat- oder Methacrylatgehalt von 5 bis 50 Gew.%. Besonders geeignete Copolymerisate besitzen vorzugsweise einen Gehalt von 70 - 90 Gew.% Vinylchlorid und 10 bis 30 Gew.% Diolmonoacrylat beziehungsweise Diolmonomethacrylat. Eine 15%ige Lösung besonders geeigneter Copolymerisate wie der Vinylchlorid-Propandiolmonoacrylat-Copolymerisate in einem Gemisch aus gleichen Volumenteilchen von Tetrahydrofuran und Dioxan weist bei 25 °C eine Viskosität von etwa 20 - 80 mPas auf. Der K-Wert nach H. Fikentscher (Cellulose-Chemie 13 (1932), S. 58 ff.), der besonders geeigneten Produkte liegt zwischen 30 und 50, vorzugsweise bei etwa 40.

Außerdem lassen sich vorteilhaft Phenoxyharze, deren Konstitution mit der wiederkehrenden Formel 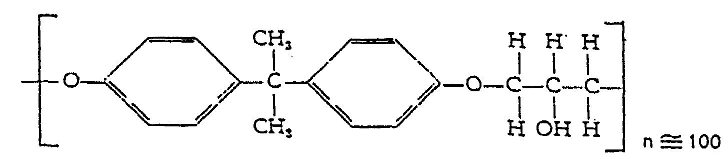 in der n annähernd gleich 100 ist, zu beschreiben ist, einsetzen. Es handelt sich hierbei um Polymere, wie sie unter den Handlungsbezeichnungen Epikote^{R} der Firam Shell Chemical Co. oder unter der Bezeichnung Epoxidharz PKHH^{R} der Union Carbide Corporation bekannt sind.

In gleicher Weise eignen sich Celluloseester-Bindemittel zur Verwendung in dem bezeichneten Bindemittelgemisch. Dies sind Veresterungsprodukte der Cellulose mit Salpetersäure oder mit Carbonsäuren mit 1 bis 4 Kohlenstoffatomen, wie zum Beispiel Celluloseacetat, Cellulosetriacetat, Celluloseacetopropionat, Celluloseacetobutyrat.

Die erfindungsgemäße Bindemittelmatrix besteht in der ersten Version in besonders bevorzugter Weise aus
5 - 25 Gewichts % der Komponente A)
15 - 60 Gewichts % der Komponente B).

Die vorteilhaften Eigenschaften der erfindungsgemäßen magnetischen Aufzeichnungsträger werden im Vergleich zu den unter Verwendung der üblichen thermoplastischen Polyurethanelastomeren erhaltenen auch deutlich, wenn vor dem Auftragen der Dispersion auf den Träger ein Polyisocyanat zugesetzt wird. Besonders günstig war hierbei die Verwendung des erfindungsgemäßen Bindemittels in Kombination mit Polyurethanelastomeren, die in ihrer bevorzugten Form auch OH-Gruppen tragen, und die OH-gruppenhaltige Polyvinylformale beziehungsweise Polyvinylchloride enthalten. Für die Vernetzung kann eine Vielzahl organischer Di-, Tri-, oder Polyisocyanate oder Isocyanatprepolymere bis zu einem Molekulargewicht von 10 000, vorzugsweise zwischen 500 und 3000, verwendet werden. Bevorzugt sind Polyisocyanate beziehungsweise Isocyanatprepolymere, die mehr als zwei NCO-Gruppen pro Molekül tragen. Als besonders geeignet haben sich Polyisocyanate auf Basis von Toluylendiisocyanat, Hexamethylendiisocyanat oder Isophorondiisocyanat, die durch Polyaddition an Di- oder Triole oder durch Biuret- und Isocyanuratbildung entstehen, erwiesen. Besonders günstig ist ein Additionsprodukt von Toluylendiisocyanat an Trimethylolpropan und Diethylenglykol. Die Menge an zugesetzter Polyisocyanatkomponente kann je nach den an das Aufzeichnungsmaterial gestellten Anforderungen, bezogen auf die OH-Gruppen der zu vernetzenden Bindemittel, im Unterschuß von bis zu 70 %, vorzugsweise bis zu 50 % oder im überschuß von bis zu 200 %, vorzugsweise von bis zu 80 % erfolgen.

Die weitere Verarbeitung des Bindemittelgemisches mit magnetischen Pigmenten und weiteren Zusätzen zu den erfindungsgemäßen magnetischen Aufzeichnungsträgern erfolgt in an sich bekannter Weise.

Als anisotrope magnetische Pigmente können die an sich bekannten Pigmente verwendet werden, die die Eigenschaften der resultierenden Magnetschicht wesentlich beeinflussen, wie zum Beispiel Gamma-Eisen(III)oxid, feinteiliger Magnetit, ferromagnetisches undotiertes oder dotiertes Chromdioxid, kobaltmodifiziertes Gamma-Eisen(III)oxid, Bariumferrite oder ferromagnetische Metallteilchen. Bevorzugt sind nadelförmiges kobaltmodifiziertes oder unmodifiziertes Gamma-Eisen(III)oxid sowie ferromagnetisches Chromdioxid und Metallpigmente oder Metall-Legierungen. Die Teilchengröße beträgt im allgemeinen 0,1 bis 2 µm, bevorzugt ist der Bereich von 0,2 bis 0,8 µm. Besonders bevorzugt sind Chromdioxid und Abmischungen von Chromdioxid mit bis zu 60 Gew.% kobaltdotiertem Eisenoxid.

In an sich bekannter Weise können die Magnetschichten ferner Zusätze wie Gleitmittel und in untergeordneten, gegenüber dem Stand der Technik verringerten Mengen Dispergiermittel, aber auch Füllstoffe wie Schleifteilchen enthalten, die bei der Dispergierung der Magnetpigmente oder bei der Herstellung der Magnetschicht zugemischt werden.

Das Mengenverhältnis von magnetischem Pigment zu Bindemittel in den erfindungsgemäßen Aufzeichnungsmaterialien liegt zwischen 1 bis 15 und insbesondere 3 bis 10 Gew.Teilen magnetischer Pigmente auf ein Gewichtsteil des Bindemittelgemisches. Es ist ein besonderer Vorteil, daß aufgrund des vorzüglichen Pigmentbindevermögens der speziellen Bindemittelmischung hohe Magnetpigmentkonzentrationen in den Magnetschichten möglich sind, ohne daß die mechanisch-elastischen Eigenschaften verschlechtert oder die Anwendungseigenschaften merklich in Mitleidenschaft gezogen werden.

Als nichtmagnetische und nicht magnetisierbare Träger lassen sich die üblichen starren oder flexiblen Trägermaterialien verwenden, insbesondere Folien aus linearen Polyestern, wie Polyethylenterephthalat, welche im allgemeinen in Dicken von 0,5 bis 200 µm und insbesondere von 1 bis 36 µm angeboten werden. In neuerer Zeit ist auch die Anwendung der Magnetschichten auf Papierträgern für Zwecke der mittleren Datentechnik bedeutend geworden; auch hierfür lassen sich die erfindungsgemäßen Beschichtungsmassen vorteilhaft verwenden.

Die Herstellung der erfindungsgemäßen magnetischen Aufzeichnungsträger kann in bekannter Weise erfolgen. Zweckmäßig wird die in einer Dispergierapparatur, zum Beispiel einer Topfkugelmühle oder einer Rührwerksmühle, aus dem magnetischen Pigment und einer Lösung der Bindemittel, vorzugsweise in einem organischen Lösungsmittel, unter Zusatz von Gleitmitteln und eventuell geringen Mengen Dispergiermitteln hergestellte Magnetpigmentdispersion nach dem Zumischen des Polyisocyanatvernetzers filtriert und mit der üblichen Beschichtungsmaschine, zum Beispiel mittels eines Linealgießers oder eines Extruders auf den nichtmagnetischen Träger aufgetragen. Die Beschichtung kann auf einer oder beiden Seiten des Trägers geschehen.

Zur Erzielung von guten magnetischen Eigenschaften bei einer kürzeren Dispergierzeit ist es von Vorteil, die Dispergierung mit der Komponente A durchzuführen und die Komponente B nach der Dispergierung einzurühren. Dieses Verfahren bietet sich an, denn die genannte Komponente B ist mit der Komponente A gut verträglich. Je nach Anwendungsgebiet beziehungsweise magnetischem Pigment muß jedoch die Reihenfolge und deren Anteil in der organischen Matrix bei der Dispergierung angepaßt werden. Es kann bei der Dispergierung von Vorteil sein, Komponente B und C, oder nur Komponente B, ganz, oder teilweise mitzuverwenden. In der Regel erfolgt eine magnetische Ausrichtung, bevor die flüssige Beschichtungsmischung auf dem Träger getrocknet wird; letzteres geschieht zweckmäßigerweise in 10 bis 200 s bei Temperaturen von 50 bis 90 °C. Die Magnetschichten können auf üblichen Maschinen mittels Hindurchführen zwischen geheizten und polierten Walzen, gegebenenfalls bei Anwendung von Druck und Temperaturen von 25 bis 100 °C, vorzugsweise 60 bis 90 °C, geglättet und verdichtet werden. Dabei hat es sich bei vernetzenden Bindemitteln als sehr vorteilhaft erwiesen, die Kalandrierung vorzunehmen, bevor die Vernetzung abgeschlossen ist, da die OH-Polymeren in unvernetztem Zustand sehr thermoplastisch sind, ohne hierbei zu verkleben. Die Dicke der Magnetschicht beträgt im allgemeinen 0,5 bis 20 µm, vorzugsweise 1 bis 10 µm. Im Falle der Herstellung von Magnetbändern werden die beschichteten Folien in der Längsrichtung und in den üblichen, meist nach Zoll festgelegten Breiten geschnitten.

Die erfindungsgemäßen magnetischen Aufzeichnungsträger zeichnen sich gegenüber solchen nach dem Stand der Technik durch eine verbesserte Feinrauhigkeit der Magnetschichtoberfläche, eine gesteigerte Verschleißfestigkeit insbesondere bei Temperatur- und Feuchtklimabelastung sowie durch erhöhte magnetische Kenndaten aus. Als Folge dieser verbesserten feinrauhen Oberflächen und erhöhter Magnetwerte steigt im Videobereich der HF-Pegel und der Chromapegel, aber auch der HiFi-Pegel deutlich an. Eine weitere Konsequenz dieser verbesserten Eigenschaften ist ein größerer Störabstand, bedingt durch ein verringertes Rauschen, speziell des Modulationsrauschens, was die Notwendigkeit zur Verwendung noch feinteiligerer Magnetpigmente verringert. Die größeren Pigmentnadeln lassen sich aber bei gleichem Richtaufwand besser richten und ergeben somit höhere Remanenz- und Pegelwerte als feinteiligere Magnetpigmente. Gegenüber dem Stand der Technik kann somit der technische Aufwand zur Dispergierung, Beschichtung und Ausrichtung der Magnetschicht reduziert werden, ohne auf die Vorteile der hohen Aufzeichnungsdichte verzichten zu müssen.

Durch die Verringerung des Dispergieraufwands, der Dispergierzeit, aber auch den hohen Festkörpergehalt der Dispersion sowie der gesteigerten Langzeitstabilität der Dispersion lassen sich die erfindungsgemäßen magnetischen Aufzeichnungsträger in einfacher und wirtschaftlicher Weise herstellen.

Die in den nachstehenden Beispielen und Vergleichsversuchen genannten Teile und Prozente beziehen sich, soweit nicht anders angegeben, auf das Gewicht.

### Beispiel 1

In einer Rührwerkskugelmühle mit einem Inhalt von 1,5 1, gefüllt mit 2,7 kg keramischen Kugeln mit einem Durchmesser zwischen 1 und 1,5 mm, wurden 1380 g organisches Lösemittel, 4930 g Dioxan, 273 g einer 25%igen Lösung eines Dispergierharzes auf Basis Polyurethanharnstoff(meth)acrylat gemäß DE-A-4 446 383, 1002 g einer 15%igen Lösung eines phosphonatgruppenhaltigen Polyharnstoffurethans gemäß DE-OS 42 41 506, 290 g einer 20%igen Lösung eines Polyvinylchlorid/Polyvinylacetat-Copolymerisats, 904 g einer 5%igen Nitrocelluloselösung mit einem K-Wert von ca. 110, 1220 g eines cobaltdotierten Eisenoxids (Hc = 58 kA/m, BET = 26 m²/g), 116 g eines mikronisierten Aluminiumoxids (BET = 10 m²/g), 113 g eines leitfähigen Rußes (BET = 200 m²/g), 58 g Fettsäureester als Gleitmittel eingefüllt und der Ansatz 14 Stunden dispergiert. Die Dispersion wurde dann unter Druck filtriert und unmittelbar vor dem Auftragen mit einer Trockendicke von 0,8 µm auf eine 75 µm dicke Polyethylenterephthalatfolie unter Rühren mit, bezogen auf 100 Teile Dispersion, 20 Teilen einer 50%igen Lösung eines Triisocyanats aus 3 Mol Toluylendiisocyanats und 1 Mol Trimethylolpropan versehen. Die beidseitig beschichtete Folie wurde bei Temperaturen zwischen 50 °C und 80 °C getrocknet und durch Hindurchführen zwischen beheizten Walzen unter Druck (Liniendruck 200 kg/cm) geglättet.

### Vergleichsbeispiel 1

Es wurde wie in Beispiel 1 beschrieben verfahren, jedoch wurde das Dispergierharz auf Basis Polyurethanharnstoff(meth)acrylat durch ein handelsübliches Dispergiermittel auf Basis eines sauren Phosphorsäureesters eines Fettalkoholalkoxylats und das Bindemittel auf Basis eines phosphonatgruppenhaltigen Polyharnstoffurethans durch ein handelsübliches Polyurethan ohne ionische funktionelle Gruppen ersetzt.

Aus dem so erhaltenen magnetischen Aufzeichnungsträger wurden kreisförmige Flexidisks mit 3,5 Zoll Durchmesser für 2 Mbyte Speicherdichten-Aufzeichnungssystem ausgestanzt und den üblichen Prüfungen unterzogen.

Die erhaltenen Meßergebnisse zeigt die Tabelle 1.

**Tabelle 1**

| | **Beispiel 1** | **Vergleichsbeispiel 1** |
|---|---|---|
| Dispergierzeit (Std.) | 12 | 20 |
| Glanz 1 | 84 | 58 |
| Glanz 2 | 80 | 30 |
| Glanz 3 | 82 | 31 |
| Oberflächenfehler | keine | keine |
| Window-Margin (%) | > 60 | 50 - 55 |
| Peak Shift (ns) | 70 - 85 | 100 - 110 |
| Noise S/N (dB) | 36 | 31 |

### Glanzmessung:

Es wird die Reflexion im 60°-Winkel an der unsatinierten Schicht gemessen.
Glanz 1: Glanzwert unmittelbar nach Ende der Dispergierung
Glanz 2: Glanzwert nach 24 Stunden Rollbrett
Glanz 3: Glanzwert nach 14 Tagen Dispersionslagerung

Window-Margin ist eine relative Kenngröße für die Erkennbarkeit eines Datenimpulses. Je höher der Wert ist, umso fehlertoleranter ist das System bezüglich Erkennbarkeit des Datenimpulses, dem sogenannten Datenfenster.

Peak-Shift ist die zeitliche Differenz zwischen der Sollage eines einzelnen Datenimpulses und der tatsächlichen Lage, jeweils gemessen bei der Maximalamplitude.

## Patentansprüche

1. Magnetischer Aufzeichnungsträger, bestehend aus einem nichtmagnetischen Trägermaterial und mindestens einer darauf haftfest aufgebrachten magnetisierbaren Schicht auf der Basis von in einer Bindemittelmischung aus mindestens einem Polyharnstoffurethan und einem Polyurethanharnstoff(meth)acrylat dispergierten magnetischen Pigmenten, dadurch gekennzeichnet, daß die Bindemittelmischung besteht aus
A) 3 bis 35 Gewichts -% eines Polyurethanharnstoff(meth)acrylats
B) 5 bis 97 Gewichts % eines anionische Gruppen enthaltenden Polyharnstoffurethans.

2. Magnetischer Aufzeichnungsträger, bestehend aus einem nichtmagnetischen Trägermaterial und mindestens einer darauf haftfest aufgebrachten magnetisierbaren Schicht auf der Basis von in einer Bindemittelmischung aus mindestens einem Polyharnstoffurethan und einem Polyurethanharnstoff(meth)acrylat dispergierten magnetischen Pigmenten, dadurch gekennzeichnet, daß die Bindemittelmischung besteht aus
A) 5 bis 25 Gewichts % eines Polyurethanharnstoff(meth)acrylats
B) 15 bis 60 Gewichts % eines anionische Gruppen enthaltenden Polyharnstoffurethans
C) 15 bis 60 Gewichts % eines polymeren Bindemittels ohne ionische Gruppen, ausgewählt aus Polyurethanen, Polyvinylchloriden, Polyvinylformalen, Phenoxyharzen, Nitrocellulose, Celluloseestern sowie deren Abmischungen.

3. Magnetischer Aufzeichnungsträger gemäß dem Anspruch 1 oder 2, dadurch gekennzeichnet, daß die anionischen Gruppen Sulfonat-, Sulfat-, Phosphonat-, Phosphat- oder Carboxylgruppen sind.

4. Magnetischer Aufzeichnungsträger gemäß Anspruch 3, dadurch gekennzeichnet, daß das Polyharnstoffurethan anionische Gruppen mit 10 - 1000 Äquivalenten pro 10⁶ g Polymerisat in der Polymerkette enthält.

## Claims

1. A magnetic recording medium, consisting of a nonmagnetic substrate and at least one magnetizable layer firmly applied thereon and based on magnetic pigments dispersed in a binder mixture comprising at least one polyureaurethane and one polyurethaneurea (meth)acrylate, wherein the binder mixture consists of
A) from 3 to 35 % by weight of a polyurethaneurea (meth)acrylate and
B) from 5 to 97 % by weight of a polyureaurethane containing anionic groups.

2. A magnetic recording medium, consisting of a nonmagnetic substrate and at least one magnetizable layer firmly applied thereon and based on magnetic pigments dispersed in a binder mixture comprising at least one polyureaurethane and one polyurethaneurea (meth)acrylate, wherein the binder mixture consists of
A) from 5 to 25 % by weight of a polyurethaneurea (meth)acrylate,
B) from 15 to 60 % by weight of a polyureaurethane containing anionic groups and
C) from 15 to 60 % of a polymeric binder without ionic groups, selected from the group consisting of polyurethanes, polyvinyl chlorides, polyvinyl formals, phenoxy resins, nitrocellulose, cellulose esters and mixtures thereof.

3. A magnetic recording medium as claimed in claim 1 or 2, wherein the anionic groups are sulfonate, sulfate, phosphonate, phosphate or carboxyl groups.

4. A magnetic recording medium as claimed in claim 3, wherein the polyureaurethane contains anionic groups in an amount of 10 - 1000 equivalents per 10⁶ g of polymer in the polymer chain.

## Revendications

1. Support d'enregistrement magnétique consistant en une matière de support non magnétique et, appliqué sur celle-ci et solidement adhérente, au moins une couche magnétique à base de pigments magnétiques dispersés dans un liant mélangé consistant lui-même en au moins un polyurée-uréthanne et un (méth)acrylate de polyuréthanne-urée, caractérisé par le fait que le liant mélangé consiste en
A) 3 à 35 % en poids d'un (méth)acrylate de polyuréthanne-urée,
B) 5 à 97 % en poids d'un polyurée-uréthanne contenant des groupes anioniques.

2. Support d'enregistrement magnétique consistant en une matière de support non magnétique et, appliquée sur celle-ci et solidement adhérente, au moins une couche à base de pigments magnétiques dispersés dans un liant mélangé consistant en au moins un polyurée-uréthanne et un (méth)acrylate de polyuréthanne-urée, caractérisé par le fait que le liant mélangé consiste en
A) 5 à 25 % en poids d'un (méth)acrylate de polyuréthanne-urée,
B) 15 à 60 % en poids d'un polyurée-uréthanne contenant des groupes anioniques,
C) 15 à 60 % en poids d'un liant polymère exempt de groupes ioniques, choisi parmi les polyuréthannes, les chlorures de polyvinyle, les polyvinylformals, les résines phénoxyliques, la nitrocellulose, les esters cellulosiques ou leurs mélanges.

3. Support d'enregistrement magnétique selon la revendication 1 ou 2, caractérisé par le fait que les groupes anioniques sont des groupes sulfonate, sulfate, phosphonate, phosphate ou carboxyle.

4. Support d'enregistrement magnétique selon la revendication 3, caractérisé par le fait que le polyurée-uréthanne contient dans la chaîne polymère des groupes anioniques à raison de 10 à 1000 équivalents pour 10⁶ g du polymère.
